# EUROPÄISCHE PATENTSCHRIFT

(11) **EP 2 394 143 B1**
(45) Veröffentlichungstag und Bekanntmachung des Hinweises auf die Patenterteilung: **02.08.2017**
(21) Anmeldenummer: 10702864.9
(22) Anmeldetag: 01.02.2010
(51) Int. Cl.: G01D 5/347

(54) **OPTOELEKTRONISCHE LAGEMESSEINRICHTUNG UND OPTOELEKTRONISCHES LAGEMESSVERFAHREN**
OPTOELECTRONIC POSITION MEASUREMENT DEVICE AND OPTOELECTRONIC POSITION MEASUREMENT METHOD
DISPOSITIF ET PROCÉDÉ OPTOÉLECTRONIQUES DE MESURE DE POSITION

(30) Priorität: 03.02.2009 EP 09151945
(43) Veröffentlichungstag der Anmeldung: 14.12.2011
(73) Patentinhaber: Leica Geosystems AG, 9435 Heerbrugg (CH)
(72) Erfinder: LIPPUNER, Heinz, CH-9445 Rebstein (CH)
(74) Vertreter: Kaminski Harmann
(86) Internationale Anmeldenummer: PCT/EP2010/051190
(87) Internationale Veröffentlichungsnummer: WO 2010/089280

(56) Entgegenhaltungen:
- EP-A- 1 484 582
- WO-A2-01/40708
- DE-C1- 3 641 288
- DE-C1- 19 835 972
- US-A- 3 731 107
- US-A- 3 752 974
- US-A1- 2005 147 372
- US-A1- 2006 268 545
- US-A1- 2007 147 221

## Beschreibung

Die Erfindung betrifft eine optoelektronische Lagemesseinrichtung nach dem Oberbegriff des Anspruchs 1 und ein optoelektronisches Lagemessverfahren nach dem Oberbegriff des Anspruchs 14.

Das Bestimmen von Richtungen, Winkeln und Längen als Lagen ist in vielen Anwendungsbereichen gefordert, wie beispielsweise in der geodätischen und industriellen Vermessung. Entwicklungen in der Winkelmesstechnik führten über mechanische Ablesevorgänge bis zur vollautomatisierten Winkelmessung nach dem heutigen Stand der Technik.

Bekannte automatisierte Lagemessvorrichtungen umfassen im Allgemeinen einen Codeträger und eine Abtasteinrichtung. Bei Winkelmesseinrichtungen ist der Codeträger üblicherweise relativ zur Abtasteinrichtung um eine Achse drehbar ausgebildet, wobei dann eine Winkellage des Codeträgers die zu messende Grösse darstellt. Der Codeträger kann zum Beispiel eine Teilung oder Codierung zur Positionsbestimmung aufweisen, wobei die Codierung auf einer Oberfläche oder Mantelfläche des Codeträgers aufgebracht sein kann.

Zur automatischen Erfassung der Lage wird der relativ zur Abtasteinrichtung bewegbare Codeträger mittels unterschiedlicher Techniken abgetastet. Bekannte Abtastverfahren sind elektronisch-magnetische, elektronische und optisch-elektronische Verfahren. Die folgenden Ausführungen beziehen sich auf optisch-elektronische Abtastverfahren und Abtasteinrichtungen, die insbesondere eine Beleuchtungseinrichtung und einen Detektor aufweisen.

Zur Bestimmung beispielsweise von Winkelstellungen von 0° bis 360° ist die Codierung üblicherweise in einem Vollkreis angeordnet. Die Winkelauflösung des Vollkreises bestimmt sich nach Art der Codierung und nach der zum Lesen der Codierung eingesetzten Abtasteinrichtung. So wird beispielsweise durch Aufbringen eines Codes in mehreren Spuren oder durch eine feinere Teilung die Winkelauflösung gesteigert, wobei die erreichbare Auflösung aus fertigungs- und kostentechnischen Gründen beschränkt ist. Zum Lesen des Codes sind z.B. Anordnungen von einem oder mehreren Detektoren bekannt. CCD-Zeilen-Arrays oder CCD-FlächenArrays können beispielsweise solche Detektoren darstellen. Die Ausbildung des Codes kann durch Strukturierung einer reflektierenden Oberfläche oder auch eines durchleuchtbaren Materials erfolgen, so dass die Abbildung in Transmission, Reflexion oder in einem kombinierten Verfahren erfolgt.

Die schweizerische Patentschrift CH 658514 A5 offenbart eine solche Vorrichtung zum Messen einer Winkellage. Dabei wird eine Marke, deren Lage in Bezug auf eine Fläche von Sensoren die zu messende Grösse darstellt, auf diese Fläche abgebildet. Die Ausgangssignale der Sensoren werden in eine Auswerteschaltung geführt, die die Verteilung der Intensität der durch die Sensoren erzeugten Signale sequentiell ermittelt. Aus der Intensitätsverteilung kann die Lage der Marke in Bezug auf die Fläche von Sensoren abgeleitet werden.

Die Abmessungen einer Lagemesseinrichtung für geodätische Geräte sind vorteilhaft gering zu halten. Um eine entsprechend kleine und wenig aufwendige Bauweise zu erlauben, werden seit einiger Zeit die Beleuchtungseinrichtung und der Detektor der Lagemesseinrichtung auf einer gemeinsamen, elektrisch versorgten Platine angeordnet, und nicht wie zuvor ober- und unterhalb eines Codeträgers jeweils auf einer separaten elektrisch versorgten Platine. Bei Lagemesseinrichtungen des Standes der Technik mit einer nebeneinander liegenden Anordnung des Detektors und der Beleuchtungseinrichtung werden die emittierten Strahlen beispielsweise durch ein Umlenkelement mit zwei planen, reflektierenden Flächen so umgelenkt, dass eine Abbildung des Codes durch den im Strahlgang nachgeordneten Codeträger auf dem Detektor erzeugt wird. Optional können dabei die emittierten Strahlen mittels einer der Beleuchtungsquelle direkt nachgeordneten Optik kollimiert werden.

Beispielsweise zeigt die US-Patentschrift US 7,145,127 B2 ein Umlenkelement für eine Lagemesseinrichtung, wobei das Umlenkelement zwei gegeneinander ausgerichtete Flächen zur zweifachen Reflexion der emittierten Strahlen aufweist und einen auf ein Sensor abbildbaren Code trägt und somit zusätzlich als Codeträger ausgebildet ist.

In DE 36 41 288 wird eine leuchtende Markierung in Winkelkodierern erzeugt, wobei auf einer definierten Fläche Licht in eine Lichtleitscheibe eingekoppelt und an Markierungen wieder ausgekoppelt wird.

EP 1 484 582 zeigt einen optoelektronischen Drehwinkelsensor für ein Fahrzeug-Lenksystem bei dem Licht radial durch eine Codescheibe auf diskrete Umlenkflächen gelangt, welche die Lichtstrahlen zu jeweiligen fotosensitiven Empfängern umlenken.

DE 198 35 972 zeigt einen Lenkwinkelsensor in Form einer optoelektronischen Positionserfassungseinrichtung mit einer Codierung in Form einer Abtastspur und einer Referenzspur, welche jeweils als Reflektionsflächen vorgesehen sind und randlich in das Geberelement eingekoppelte Lichtstrahlen der Codierung entsprechend aus dem Geberelement heraus zu einem Zeilensensor hin reflektieren, woraus ein absoluter Winkel bestimmt wird.

US 3,731,107 zeigt eine Codescheibe in welche Licht radial eingekoppelt und durch totalreflektion geführt wird. An ausgewählten Stellen der Oberfläche der Codescheibe sind diskrete, eindeutige Auskopplungsmuster in Form von Einkerbungen oder in Form von Materialaufbringungen mit unterschiedlichem Brechungsindex angebracht, an welchen Licht auf zugehörige optische Detektorelemente ausgekoppelt wird.

Eine Aufgabe der Erfindung ist somit die Bereitstellung einer Lagemesseinrichtung mit vereinfachtem Aufbau bzw. eines hierfür geeigneten Lagemessverfahrens.

Eine weitere Aufgabe ist eine Verringerung der Grösse sowie die Erhöhung der Robustheit der Lagemesseinrichtung.

Diese Aufgaben werden durch die Verwirklichung der kennzeichnenden Merkmale der unabhängigen Ansprüche gelöst.

Merkmale, die die Erfindung in alternativer oder vorteilhafter Weise weiterbilden, sind den abhängigen Patentansprüchen zu entnehmen.

Die Erfindung beruht auf einer grundlegenden Veränderung des zur Beleuchtung des Positionscodes verwendeten Strahlgangs. Hierbei wird die Strahlführung in den Codeträger verlegt. Diese Gestaltung des Codeträgers wird auch in der europäischen Patentanmeldung EP 2 213 987 beschrieben und in den Ansprüchen definiert. Gemäss der Erfindung wird die Auskopplung der Strahlung aus dem Codeträger so gestaltet, dass die Ausleuchtung eines Erfassungselements mit homogener Intensität erfolgt.

Im Stand der Technik erfolgt die Beleuchtung des Positionscode gemäss Durch- oder Auflichtverfahren, indem die Strahlung möglichst senkrecht auf den Codeträger geführt wird. Je nach konkreter Ausgestaltung sind hierfür Umlenkelemente oder komplizierte Strahlgänge erforderlich, wodurch neben der hierfür erforderlichen Grösse der Vorrichtung auch ein erhöhter Justageaufwand sowie eine verringerte Robustheit resultieren. In der Erfindung wird die zur Beleuchtung verwendete Strahlung in den Codeträger selbst eingekoppelt und dort zumindest streckenweise geführt, wobei der Strahlgang zumindest teilweise in der Ausdehnungsebene des Codeträgers sowie in den meisten Fällen auch des Positionscodes liegt. Dies bedeutet, dass die Ausbreitungsrichtung der Strahlung bzw. die optische Achse des Strahlgangs in dieser Ebene liegen, was trotz der Verwendung eines ebenen Codeträgers bzw. eines flächigen bzw. linear ausgedehnten Codes eine flache Bauweise ermöglicht. Bevorzugterweise erfolgt eine Strahlführung bis zum Positionscode selbst, so dass dieser aus dem Codeträger heraus beleuchtet wird.

Als geeignete Codeträgermaterialien können hierfür bereits die allgemein im Stand der Technik verwendeten Werkstoffe Glas- oder Kunststoff Verwendung finden, in denen eine Strahlführung durch Reflexion an den Grenzflächen möglich ist. Grundsätzlich können jedoch auch Hohlkörper, z.B. aus Metall, verwendet werden, wobei hier eine Reflexion an den Innenflächen erfolgt.

Für den Anwendungszweck eines Winkelmessers oder Rotationsencoders kann beispielsweise ein Kunststoffkreis oder Kunststoffring mit eingeprägtem diffraktiven Code Verwendung finden, wie er beispielsweise in der WO 2008/141817 beschrieben wird. In diesen Kunststoffkreis wird von innen oder aussen mit einer Lichtquelle die Beleuchtungsstrahlung durch die Schmalseite eingekoppelt. Die den Positionscode repräsentierende Teilung besteht aus abwechselnd vorkommenden gestörten und ungestörten Partien an der Oberfläche der Scheibe, gebildet aus diffraktiven, refraktiven, absorbierenden oder reflektierenden Strukturen. Dementsprechend kann der Positionscode bspw. in Reflektion oder Transmission als Phasen- oder Amplitudengitter ausgebildet sein. Als Empfänger dient ein Flächen- oder Zeilenarray auf der Seite des Kreises auf der die Oberfläche teilweise gestört ist oder bei entsprechender Ausführung auch auf der anderen Seite, wobei eine Mehrzahl von Arrays und Lichtquellen verwendet werden kann, zur Bestimmung oder Elimination von systematischen Fehlern, wie z.B. Exzentrizitätsfehlern, oder zur Erhöhung der Messgenauigkeit. Solche hochpräzisen Winkelsensoren finden typischerweise Anwendung in geodätischen Messgeräten oder abtastenden Messmaschinen, wie z.B. Koordinatenmessgeräten.

Durch die zumindest teilweise Strahlführung im Codeträger können sehr flache und kompakte Anordnungen realisiert werden, indem eine Einkopplung der Strahlung von der Seite des Detektors her oder rechtwinklig hierzu erfolgt. Im Gegensatz zu anderen Lösungen des Stands der Technik muss hierdurch keine Strahlführung auf die dem Detektorelement gegenüberliegende Seite mehr erfolgen. Diese Ausgestaltung erlaubt somit auch die Anordnung von Strahlquelle, Detektorelement sowie von Ansteuer- und Auswerteelektronik auf einem einzigen Träger, z.B. einer gedruckten Leiterplatte oder Platine.

Im Gegensatz zu anderen Anordnungen des Stands der Technik, die das Auf- oder Durchlichtverfahren nutzen, entsteht durch die Strahlführung innerhalb des Codeträgers das Problem einer ungleichmässigen Ausleuchtung des Positionscodes. So wird bei einer Führung der Strahlung innerhalb einer Codescheibe mittels totaler interner Reflexion (TIR) und der Anbringung des Positionscodes auf einer der Stirnflächen der Codescheibe dieser schräg beleuchtet, so dass die Ausleuchtung über die Codefläche ungleichmässig erfolgt. Zudem erfolgt durch die Auskopplung von Licht einer Verringerung der Rückreflexion im Codeträger, welcher zu einer geringeren Intensität an nachfolgenden stellen des Positionscodes führt. Durch diese baulich bedingten Einflüsse wird der Positionscode ungleichmässig, d.h. inhomogen ausgeleuchtet, so dass die Bild- oder Sensorpunkte eines Empfängerelementes unterschiedliche Maximalintensitäten registrieren.

Gemäss der Erfindung erfolgt deshalb eine Homogenisierung der Ausleuchtung im Bereich des Positionscodes durch eine entsprechende Gestaltung der Auskopplungszone. Hierzu können beispielsweise zwei Ansätze verfolgt werden. Zum einen kann der Auskopplungsgrad so gering gehalten werden, dass die Beeinflussung nachfolgender Codeabschnitte durch die Auskopplung in vorangegangenen Abschnitten vernachlässigbar ist. Dieser Ansatz einer schwachen Auskopplung setzt aber der nutzbaren Lichtmenge Grenzen bzw. erfordert starke Quellen oder hohe empfängerseitige Verstärkungen.

Zum anderen kann die Auskopplung in ihrer Charakteristik so gestaltet werden, dass die Auskopplung eine ortsabhängige Charakteristik aufweist, insbesondere die optische Strahlung so ausgekoppelt wird, dass der pro Längeneinheit durch die Auskopplung entstehende Intensitätsabfall für die nachfolgende Längeneinheit kompensiert wird. Damit erhalten alle Sensor- bzw. Bildpunkte des Erfassungselements die gleiche Lichtmenge. Die Strahlbeeinflussung kann dabei durch eine Vielzahl Modifikationen des Codeträgers oder dessen Oberfläche im Bereich der Auskopplungszone erfolgen. Bevorzugt kann dieser Bereich mittels diffraktiven oder refraktiven Mikrostrukturen ausgestaltet werden, insbesondere durch Gitter- oder Prismenstrukturen.

Die erfindungsgemässe Anordnung, d.h. die Ausgestaltung gemäss der Erfindung, ist hierbei sowohl für ein Rotation messende Winkelsensoren als auch für die Messung von linearen
Verschiebungen geeignet. Auch kann eine Verwendung sowohl für absolut als auch für relativ bzw. inkrementell messende Systeme erfolgen.

Geeignete Verfahren zur Herstellung geeigneter Codeträger stehen beispielsweise in Form spezieller Kontaktverfahren, z.B. durch Spritzguss, zur Verfügung. Damit können codetragenden Bauteile oder Codeträger als spezielle Komponenten auch aus Kunststoff, beispielsweise aus Polycarbonat, hergestellt werden, für die schnelle und einfache Reproduktionsverfahren zur Verfügung stehen. Insbesondere können auch Verfahren zur Anwendung kommen, wie sie im Bereich der Herstellung optischer Speichermedien, z.B. von Compact Discs (CD), üblich sind.

Das Eintrittsfenster der Strahlung und die zur Strahlführung verwendeten Flächen können bei den verwendeten Glas- oder Kunststoffmaterialien poliert werden. Zur Verminderung oder Erhöhung des Reflexionsvermögens der Oberfläche, d.h. zur Einkopplung und nachfolgend zur Strahlführung im Inneren des Codeträgers, können zudem entsprechende Beschichtungen auf dem Codeträger aufgebracht werden.

Die erfindungsgemässe Lagemesseinrichtung und das Lagemessverfahren wird nachfolgend anhand von in den Zeichnungen schematisch dargestellten Ausführungsbeispielen rein beispielhaft näher beschrieben oder erläutert.

Im Einzelnen zeigen
- Fig.1: eine Ringscheibe als Codeträger mit einem optisch erfassbaren Positionscode nach dem Stand der Technik;
- Fig.2: eine Lagemesseinrichtung des Standes der Technik, wobei Beleuchtungsquelle und Detektor auf unterschiedlichen Seiten des Codeträger angeordnet sind;
- Fig.3: eine Lagemesseinrichtung des Standes der Technik, wobei eine Strahlumlenkung auf der der Beleuchtungsquelle und dem Detektor gegenüberliegenden Seite des Codeträgers erfolgt;
- Fig.4-b: eine Erläuterung des Aufbaus einer erfindungsgemässen Lagemesseinrichtung für das Beispiel eines Winkelmessers;
- Fig.5: eine Erläuterung des Grundprinzips der Strahlführung in einer erfindungsgemässen Lagemesseinrichtung;
- Fig.6: eine erste Ausführungsform der Anordnung von Komponenten in einer erfindungsgemässen Lagemesseinrichtung;
- Fig.7: eine zweite Ausführungsform der Anordnung von Komponenten in einer erfindungsgemässen Lagemesseinrichtung;
- Fig.8: eine dritte Ausführungsform der Anordnung von Komponenten in einer erfindungsgemässen Lagemesseinrichtung;
- Fig.9: eine vierte Ausführungsform der Anordnung von Komponenten in einer erfindungsgemässen Lagemesseinrichtung;
- Fig.10: eine fünfte Ausführungsform der Anordnung von Komponenten in einer erfindungsgemässen Lagemesseinrichtung;
- Fig.11: eine sechste Ausführungsform der Anordnung von Komponenten in einer erfindungsgemässen Lagemesseinrichtung;
- Fig.12: eine siebte Ausführungsform der Anordnung von Komponenten in einer erfindungsgemässen Lagemesseinrichtung;
- Fig.13: eine achte Ausführungsform der Anordnung von Komponenten in einer erfindungsgemässen Lagemesseinrichtung;
- Fig.14: eine neunte Ausführungsform der Anordnung von Komponenten in einer erfindungsgemässen Lagemesseinrichtung;
- Fig.15: eine erste Ausführungsform der Strahlführung in einer erfindungsgemässen Lagemesseinrichtung;
- Fig.16: eine zweite Ausführungsform der Strahlführung in einer erfindungsgemässen Lagemesseinrichtung;
- Fig.17: eine dritte Ausführungsform der Strahlführung in einer erfindungsgemässen Lagemesseinrichtung;
- Fig.18: eine vierte Ausführungsform der Strahlführung in einer erfindungsgemässen Lagemesseinrichtung;
- Fig.19: eine fünfte Ausführungsform der Strahlführung in einer erfindungsgemässen Lagemesseinrichtung;
- Fig.20: eine sechste Ausführungsform der Strahlführung in einer erfindungsgemässen Lagemesseinrichtung,
- Fig.21: eine siebte Ausführungsform der Strahlführung in einer erfindungsgemässen Lagemesseinrichtung;
- Fig.22: eine schematische Darstellung der Auskopplungsproblematik bei einer erfindungsgemässen Strahlführung im Codeträger;
- Fig.23: eine schematische Darstellung des erfindungsgemässen Prinzips der schwachen Auskopplung;
- Fig.24: eine erste Ausführungsform einer Struktur zur Verwirklichung der erfindungsgemässen starken Auskopplung;
- Fig.25: eine zweite Ausführungsform einer Struktur zur Verwirklichung der erfindungsgemässen starken Auskopplung und
- Fig.26: eine dritte Ausführungsform einer Struktur zur Verwirklichung der erfindungsgemässen starken Auskopplung.

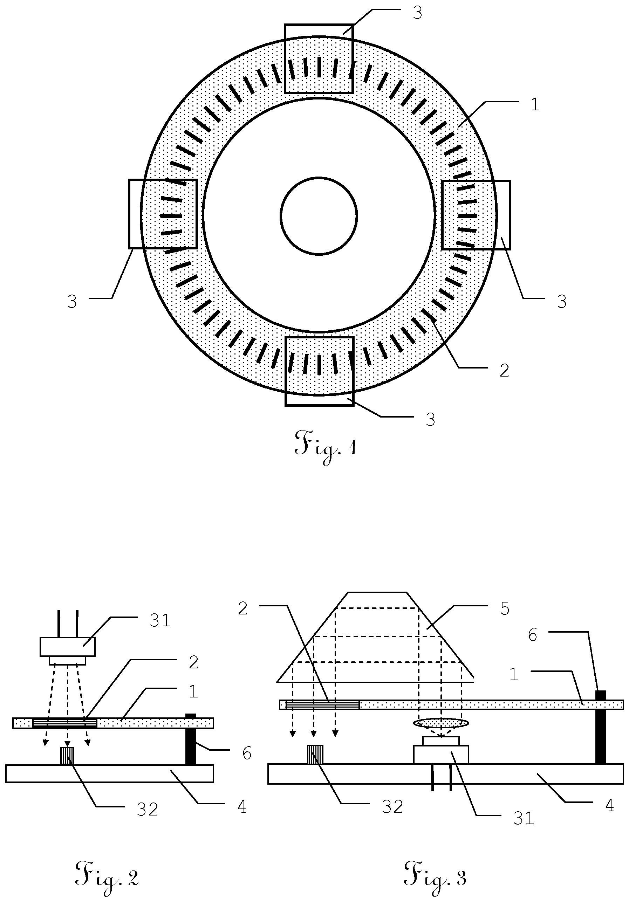

Als ein typisches Beispiel für eine Lagemesseinrichtung nach dem Stand der Technik wird in Fig.1 eine Ringscheibe als Codeträger 1 mit einem optisch erfassbaren Positionscode 2 zum Bestimmen einer Dreh-Lage dargestellt. Der Codeträger 1 ist als Ringsegment und beispielsweise aus Kunststoff ausgebildet und weist als Positionscode 2 eine konzentrisch angeordnete Codespur auf. Die weissen Bereiche des Positionscodes 2 sind lichtdurchlässig und die schwarzen Bereiche lichtundurchlässig ausgebildet. Durch ein Anleuchten eines positionsabhängigen Teils des Codeträgers 1 kann eine Schattenprojektion mit codierter Information über den angeleuchteten Teil des Codeträgers 1, und somit mit Information über eine Dreh-Lage des Codeträgers 1 relativ zu einer beleuchtenden Strahlungsquelle, die in den folgenden Figuren gezeigt wird, erzeugt werden. Zur Erfassung der Information wird hierbei eine Lesekopfkombination 3 aus Strahlungsquelle und Detektor verwendet, wobei bspw. zur Bestimmung oder Beseitigung von Fehlern auch eine Mehrzahl von Lesekopfkombinationen 3 verwendet werden kann.

Fig.2 zeigt eine Lagemesseinrichtung des Standes der Technik, wobei Strahlungsquelle 31 und ein Detektor als Erfassungselement 32 auf unterschiedlichen Seiten des Codeträgers 1 angeordnet sind. Als Strahlungsquelle 31 wird in diesem Beispiel eine LED verwendet, die optische Strahlung direkt und ohne Umlenkung auf den Positionscode 2 emittiert. Die emittierte Strahlung ist durch die gestrichelten Linien dargestellt.

Der Codeträger 1 weist Positionscode 2 auf und ist rotatorisch beweglich um eine Rotationsachse 6 ausgebildet. In dieser typischen Anordnung des Stands der Technik ist zwar der Strahlgang vergleichsweise einfach ausgeführt, allerdings ist es nicht möglich, sowohl Strahlungsquelle 31 als auch Erfassungselement 32 auf ein- und derselben Trägerstruktur, z.B. einer Leiterplatte 4, anzuordnen.

In Fig.3 wird eine Lagemesseinrichtung des Standes der Technik gezeigt, wobei eine Strahlumlenkung auf der der Strahlungsquelle 31 und dem Erfassungselement 32 gegenüberliegenden Seite des Codeträgers 1 erfolgt. In diesem Beispiel wird eine Laserdiode als Strahlungsquelle 31 verwendet, die so angeordnet ist, dass die emittierte Strahlung senkrecht durch oder um den Codeträger 1 und über ein Umlenkelement 5 wieder zurück auf den Positionscode 2 und nachfolgend auf das Erfassungselement 32 geführt wird. In diesem Beispiel können zwar sowohl Strahlungsquelle 31 als auch Erfassungselement 32 auf ein- und derselben Leiterplatte 4 angeordnet werden, jedoch ist ein Umlenkelement 5 auf der gegenüberliegenden Seite des Codeträgers 1 erforderlich, welcher die Strahlung zurück auf den Positionscode 2 lenkt.

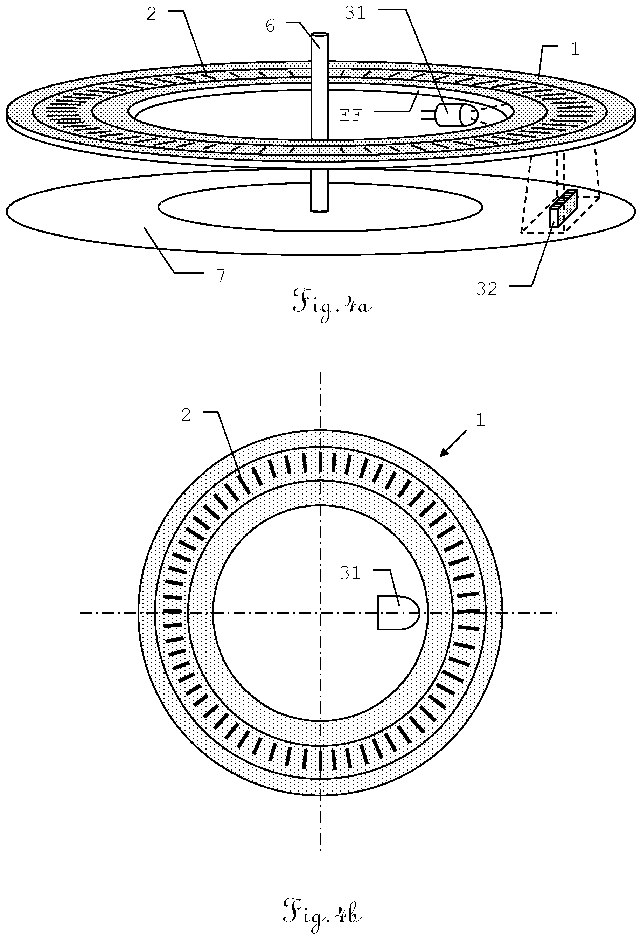

Beide Anordnungsvarianten des Stands der Technik verhindern eine flache und einfache bzw. robuste Anordnung der Komponenten. Ein dies ermöglichender erfindungsgemässer Aufbau einer Lagemesseinrichtung für das Beispiel eines Winkelmessers wird in Fig.4a-b gezeigt, wobei Fig.4a eine Seitenansicht und Fig.4b eine Draufsicht zeigen.

Die erfindungsgemässe optoelektronische Lagemesseinrichtung weist einen Codeträger 1 mit ringförmiger Geometrie auf, der einen optisch erfassbaren Positionscode 2 trägt und gegenüber einer einen Zeilensensor als Erfassungselement 32 tragenden Komponente rotierbar ist. Der Positionscode 2 kann insbesondere als diffraktiver Code ausgebildet sein. Zur Beleuchtung wird bspw. eine Laserdiode oder eine LED als Strahlungsquelle 31 verwendet, die eine - hier nicht dargestellte - Blende aufweist und optische Strahlung emittiert, die über den Positionscode 2 auf das Erfassungselement 32 zum Empfang wenigstens eines Teiles der optischen Strahlung geführt wird, wodurch ein vom Positionscode abhängiges Signal erzeugbar und somit eine Lage des Codeträgers 1 relativ zum Erfassungselement 32 erfassbar ist. Hierbei kann je nach Auslegung von Lagemesseinrichtung oder Positionscode jedoch auch ein andersartiger Sensor, z.B. ein Flächensensor oder Flächen-Array Verwendung finden. Der Codeträger 1 ist relativ zum Erfassungselement 32 mit einem Freiheitsgrad bewegbar, d.h. in diesem Beispiel um eine Achse 6 rotierbar. Dabei sind Strahlungsquelle 31 und Codeträger 1 derart angeordnet und ausgebildet, dass die optische Strahlung in den Codeträger 1 eingekoppelt und zumindest teilweise in einem in der Ausdehnungsebene des Positionscodes 2 liegenden Strahlgang im Inneren des Codeträgers 1 geführt wird. Die Strahlführung kann hierbei bis zum Positionscode 2 im Inneren des Codeträgers 1 erfolgen.

Hierfür ist der Codeträger 1 aus einem für die optische Strahlung durchlässigem Material ausgebildet, insbesondere aus Glas oder Polycarbonat, so dass die Strahlung im inneren des Codeträgermaterials selbst geführt werden kann. Zudem können im Strahlgang an der Oberfläche oder im Inneren des Codeträgers 1 strahlformende und/oder strahlumlenkende Elemente integriert werden. In diesem Beispiel wird die optische Strahlung radial von innen in den Codeträger eingekoppelt, d.h. über die als Eintrittsfenster EF dienende schmale Innenseite des Rings. Dabei kann die Strahlung jedoch auch von radial aussen in die Mantelfläche oder in axialer Richtung durch eine der Stirnflächen in den Codeträger 1 eingekoppelt werden.

In den inneren oder äusseren Rand des Ringes bzw. Kreises können optische Elemente integriert bzw. der Rand als optisch wirksam und strahlverändernd ausgebildet sein. Insbesondere können erfindungsgemäss Abbildungs- und Umlenkelemente Verwendung finden, wie z.B. Linsen, Spiegelflächen oder diffraktive Elemente.

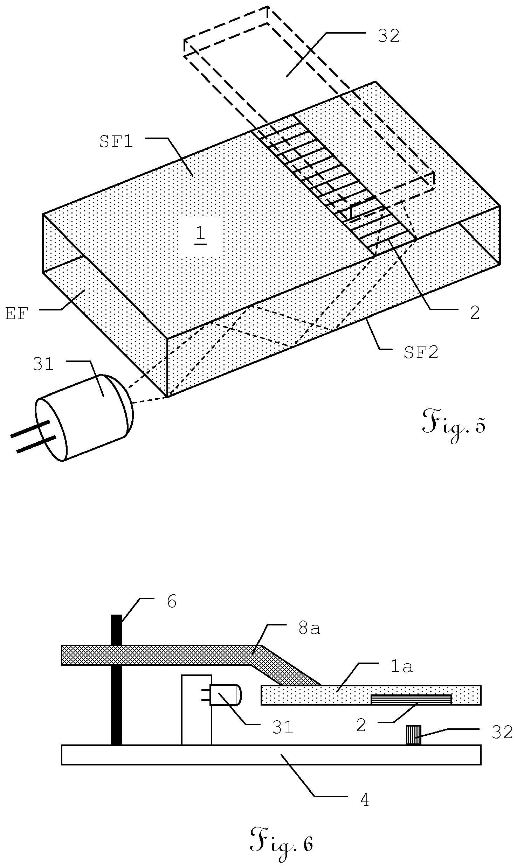

Das Grundprinzip der Strahlführung in einer erfindungsgemässen Lagemesseinrichtung wird in Fig.5 näher erläutert, wobei die gezeigte Darstellung sowohl die in Fig.4a-b dargestellte Lagemesseinrichtung mit Winkelmessfunktionalität wie auch Lagemesseinrichtung zur Bestimmung linearer Verschiebungen gleichermassen betreffen kann.

Die von der Strahlungsquelle 31 emittierte Strahlung wird über ein Eintrittsfenster EF in den Codeträger 1 eingekoppelt und dort im Inneren durch Reflexionen an den beiden senkrecht zum Eintrittsfenster orientierten Stirnflächen SF1 und SF2 reflektiert und bis zum diffraktiv wirkenden Positionscode 2 geführt. Dessen Beugungsmuster wird auf das hier nur angedeutet dargestellte Erfassungselement 32 projiziert. Werden mehrere Strahlungsquellen 32 verwendet, so kann durch deren unterschiedliche Winkel zum Eintrittsfenster EF auch eine Durchmischung und damit Homogenisierung der Strahlung erreicht werden.

In den Fig.6-14 werden durch mehrere Ausführungsformen die Anordnungen von Erfassungselement 32 und Strahlungsquelle 31 auf derselben Seite des Codeträgers 1 veranschaulicht, wie sie mit einer erfindungsgemässen Ausgestaltung der Lagemesseinrichtung möglich werden.

Fig.6 zeigt hierbei eine erste Ausführungsform der Anordnung der Komponenten in einer erfindungsgemässen Lagemesseinrichtung. Erfassungselement 32 und Strahlungsquelle 31 sind hierbei auf einer gemeinsamen Leiterplatte 4 bzw. Platine angeordnet, wobei allerdings die Strahlungsquelle 31 so an einem Ausleger befestigt ist, dass deren Strahlung parallel zur Ausdehnung der Leiterplatte 4 emittiert und somit in die Ebene des Codeträgers 1a eingekoppelt werden kann. Dieser ist wie in den Fig.4a-b und 5 als Ring ausgeführt, wobei die Verbindung mit der Achse 6 über eine die Aufnahme nach oben versetzende Halterung 8a hergestellt wird, so dass für die Strahlungsquelle 31 genug Platz verbleibt.

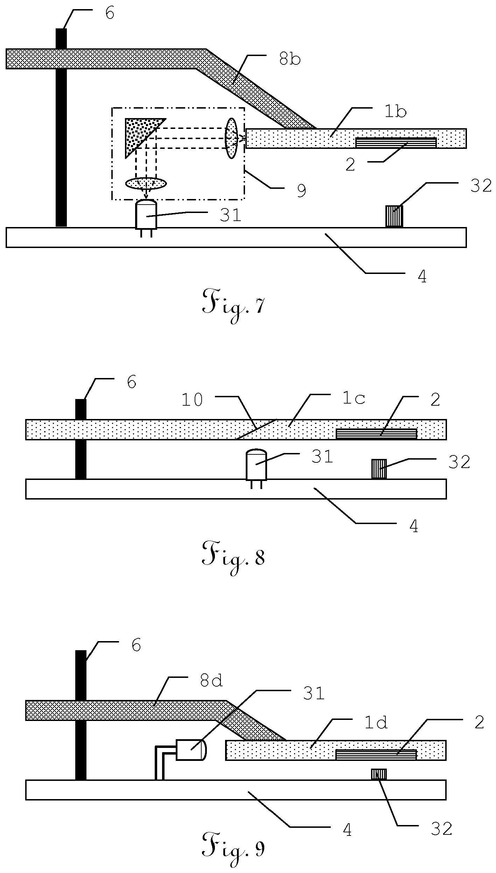

Eine direkte Anordnung von Strahlungsquelle 31 und Erfassungselement 32 auf der Leiterplatte 4 zeigt Fig.7 für eine zweite Ausführungsform. Hier werden beide Komponenten direkt auf die Leiterplatte 4 montiert, so dass beide eine zu dieser senkrechte Emissions- bzw. Empfangsrichtung zeigen. Der Codeträger 1b ist wiederum über eine die Aufnahme nach oben versetzende Halterung 8b mit der Achse 6 verbunden. Allerdings erfolgt die Einkopplung der Strahlung nunmehr durch eine umlenkende Strahlführung, wobei eine kollimierende, über eine Prisma oder eine Spiegelfläche umlenkende und nachfolgend wieder fokussierende Optikanordnung 9 zum Einsatz kommen kann.

Eine noch flachere Anordnung mit ebenfalls direkter Befestigung der Komponenten auf einer gemeinsamen Leiterplatte 4 zeigt Fig.8 für eine dritte Ausführungsform. Die optische Strahlung wird hier auf derselben Seite in den Codeträger 1c eingekoppelt, auf der das Erfassen der Projektion durch das Erfassungselement 32 erfolgt, d.h. die Einkopplung erfolgt nicht mehr durch die Innenseite des Ringes als Eintrittsfenster, sondern nutzt hierfür die untere, der Leiterplatte 4 zugewandte Stirnfläche des Codeträgers 1c, der direkt mit der Achse 6 verbunden ist. Die Strahlumlenkung in die Ebene der Ausdehnung des Codeträgers 1c und damit in dessen Bewegungsebene erfolgt durch ein in den Codeträger 1c integriertes Umlenkelement, in diesem Fall durch eine reflektierende Grenzschicht 10. Diese kann beispielsweise dadurch erzeugt werden, dass der Codeträger 1c aus zwei Teilen aus identischem Material zusammengesetzt wird, wobei die Verbindungsfläche als Schrägschliff ausgeführt sein kann. Dieser Schliff kann dabei noch zusätzlich reflektionserhöhend beschichtet werden. Nach Eintritt in den Codeträger 1c und Umlenkung wird dann die Strahlung in der Ebene der Bewegung und der Ausdehnungsebene des Positionscodes 2 geführt.

Bei der in Fig.9 gezeigten vierten Ausführungsform wird eine Laserdiode oder LED als Strahlungsquelle 31 so mit abgewinkelten Kontakten auf der Trägerplatte 4 angeordnet, dass ihre Emissionsrichtung parallel zur Trägerplatte 4 verläuft und eine Einkopplung in die Ebene des Codeträgers 1d erfolgen kann. In diesem Beispiel ist der Codeträger 1d wiederum über eine die Aufnahme bzw. die Aufnahmeebene mit der Achse 6 nach oben versetzende Halterung 8d verbunden.

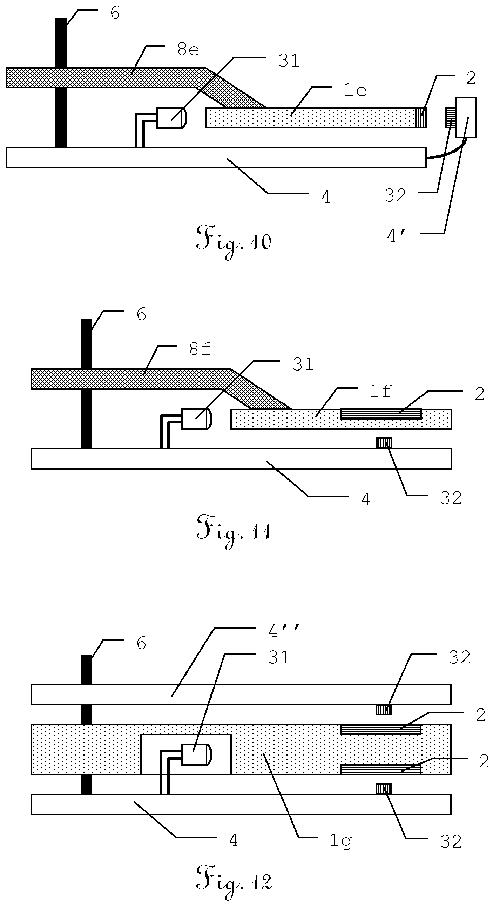

Eine zur Ausführungsform der Fig.9 ähnliche Variante wird in Fig.10 als fünfte Ausführungsform dargestellt, wobei hier das Erfassungselement 32 so angeordnet ist, dass dessen Empfangsrichtung ebenfalls parallel zur Leiterplatte 4 und in der Ebene des Codeträgers 1e verläuft. Hierzu kann das Erfassungselement 32 ebenfalls in zur Strahlungsquelle 31 analoger Weise mit abgewinkelten Kontaktelementen ausgeführt sein oder aber wie im gezeigten Beispiel auf einer eigenen Leiterplatte 4' aufgebracht sein, die wiederum ihrerseits gegenüber der die Strahlungsquelle 31 tragenden Leiterplatte 4 abgewinkelt angeordnet ist. In dieser Ausführungsform ist aufgrund der veränderten Strahlführung mit vollständig in der Ebene des Codeträgers 1e liegendem Strahlgang der Positionscode 2 an der Aussenfläche des ringförmigen Codeträgers 1e angeordnet. Auch ist wiederum der Codeträger 1e mit der Achse 6 über eine versetzende Halterung 8e verbunden

Fig.11 zeigt als eine sechste Ausführungsform ebenfalls eine zur Ausführungsform der Fig.9 ähnliche Variante mit identischer Anordnung von Strahlungsquelle 31 und Erfassungselement 32 auf der gemeinsamen Leiterplatte 4. Allerdings ist der Positionscode 2 innerhalb des Codeträgers 1f auf der dem Erfassungselement gegenüberliegenden Seite angeordnet, so dass die Projektion des Positionscodes 2 vor der Detektion durch das Erfassungselement 32 noch innerhalb des Materials des Codeträgers 1f geführt wird, d.h. das Erfassungselement 32 muss nicht notwendigerweise auf der gleichen Seite des Codeträgers 1f wie der Positionscode 2 angebracht sein.

Eine siebte Ausführungsform der Anordnung von Komponenten mit einer zusätzlichen Leiterplatte 4" wird in Fig.12 veranschaulicht. In dieser Ausführungsform ist die Strahlungsquelle 31 in einer den Fig.9-11 entsprechenden Weise auf einer Leiterplatte 4 befestigt, welche auch ein Erfassungselement 32 trägt. Ein zweites Erfassungselement 32 ist mit entgegengesetzter Empfangsrichtung auf einer zweiten Leiterplatte 4" befestigt, wobei diese parallel zur ersten Leiterplatte 4 verläuft und mit dieser eine gemeinsames fixes Bezugssystem gegenüber dem Codeträger 1g bilden. Hierbei sind beide Erfassungselemente 32 gegenüberliegend, d.h. mit gegeneinander gerichteten Empfangsrichtungen angeordnet. Die Strahlungsquelle 31 ist in einer Nut bzw. Rille des Codeträgers 1g so positioniert, dass deren Emission im Inneren des Codeträgers laufend nach aussen und damit über die Innenfläche der Nut in das Material des Codeträgers 1g erfolgt. Dieser weist nun an beiden gegenüberliegenden Stirnflächen zwei Positionscodes 2 von gleicher Art auf, wobei jedoch auch grundsätzlich unterschiedliche Codetypen erfindungsgemäss verwendbar sind. In diesem Beispiel sind sowohl Positionscodes 2 als auch Erfassungselemente 32 jeweils mit gleichem Abstand zum Drehzentrum angeordnet. Durch eine solche doppelte Auslegung können Fehler bestimmt werden, z.B. Achsfehler oder eine Verkippung des Codeträgers 1g. Ein solcher Fehler würde bspw. je nach Kipprichtung und Lage der Erfassungselemente 32 zu Kippachse zu einer gegenläufigen Verschiebung der radialen Position oder der Winkelposition des abgebildeten Codes führen, aus der dann auch die Verkippung bestimmt werden kann. Zudem kann die Verwendung von zwei Erfassungselementen 32 auch zur Genauigkeitssteigerung genutzt werden, z.B. durch Mittelwertbildung beider Drehlagen.

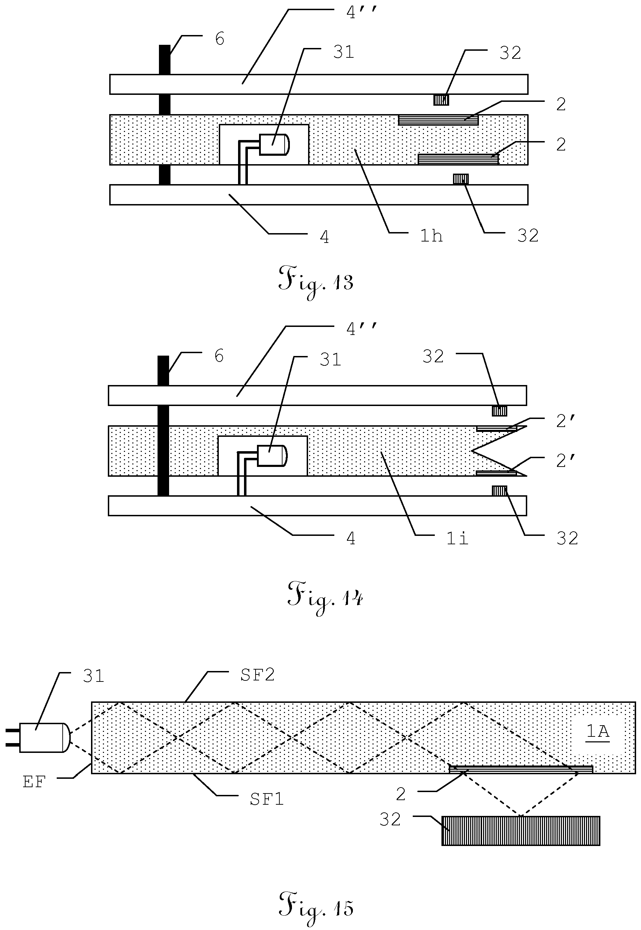

Eine ähnliche achte Ausführungsform wird in Fig.13 erläutert. Bei zum Beispiel aus Fig.12 grundsätzlich gleichem Aufbau sind die beiden Positionscodes 2 nun mit unterschiedlichem Abstand zum Drehzentrum bzw. zum Mittelpunkt des Codeträgers 1h angeordnet, was ebenfalls zur Fehlerkompensation oder zur Genauigkeitssteigerung genutzt werden kann.

Bei Verwendung einer breitbandigen Strahlungsquelle 31, z.B. einer weissen LED, kann durch ein oder mehrere Erfassungselemente 32 mit unterschiedlichen spektralen Charakteristiken eine mehrfache Auswertung erfolgen, z.B. indem auch entsprechend an eine speziellen Wellenlänge angepasste Gitter als Positionscodes 2 verwendet werden. Eine solche spektrale Empfindlichkeit kann beispielsweise durch Filter auf einem Flächenarrays als Erfassungskomponente 32 bewirkt werden. Die siebte und achte Ausführungsform erlauben durch die mehrfache Verwendung von Positionscode 2 und Erfassungskomponente 32 eine abgestimmte Auslegung der einzelnen Komponenten für unterschiedliche Wellenlängen oder Wellenlängenbereiche, so dass mehrfache Messungen möglich sind.

Fig.14 zeigt eine neunte Ausführungsform mit einem zur siebten und achten Ausführungsform analogem Aufbau und identischer Anordnung von Leiterplatten 4 und 4" sowie von Strahlungsquelle 31 und zwei Erfassungselementen 32. Allerdings ist der äussere Rand des Codeträgers 1i mit zwei zueinander gewinkelten Schrägflächen versehen, die einen Winkel von z.B. 45° zur oberen bzw. unteren Stirnfläche des Codeträgers 1i aufweisen. Die von der Strahlungsquelle 31 emittierte Strahlung wird durch diese zwei Flächen aufgeteilt und über die Positionscodes 2' auf das jeweils zugeordnete Erfassungselement 32 geführt. Dabei können die Positionscodes 2' neben einem stetigen und periodischen beispielsweise auch als unstetiges Amplitudengitter ausgeführt sein.

Verschiedene Varianten der Strahlführung werden in den Fig.15-21 rein exemplarisch erläutert.

Fig.15 zeigt eine erste Ausführungsform der Strahlführung in einer erfindungsgemässen Lagemesseinrichtung, die dem in Fig.4-b dargestellten Beispiel entspricht. Die von der Strahlungsquelle 31 emittierte Strahlung wird über ein senkrecht zur Emissionsrichtung orientiertes Eintrittsfenster EF in den Codeträger 1A eingekoppelt und dort an den Stirnflächen SF1 und SF2 reflektiert. Durch die Reflexionen wird die Strahlung in der Ausdehnungsebene von Positionscode 2 bzw. Codeträger 1A bis hin zum Positionscode 2 geführt und dort auf das Erfassungselement 32 projiziert.

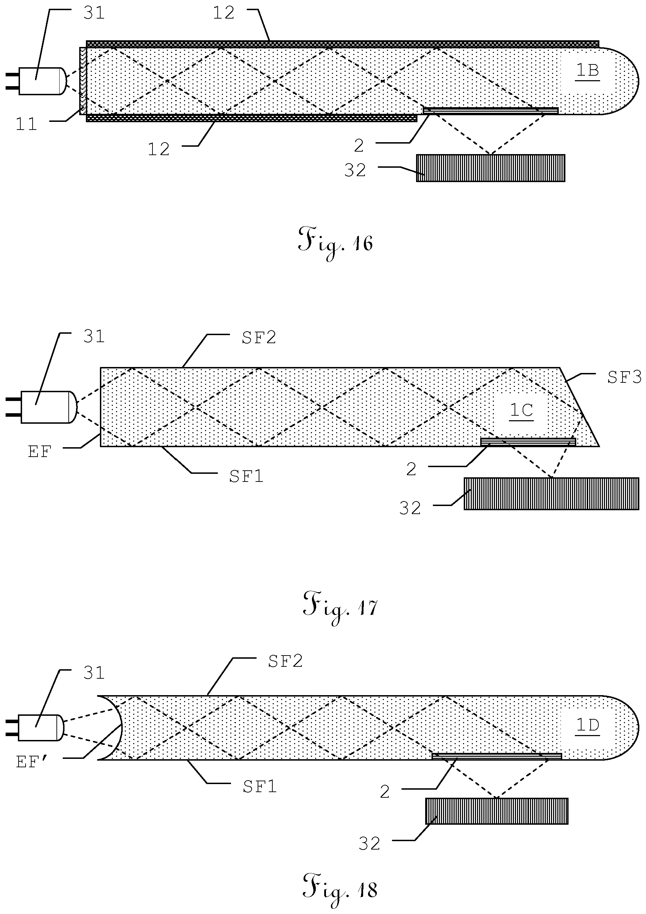

Einen ähnlichen Aufbau zeigt eine in Fig.16 dargestellte zweite Ausführungsform der Strahlführung, bei der auf dem Eintrittsfenster des Codeträgers 1B transmissionserhöhende Schicht 11 zur verbesserten Einkopplung der Strahlung aufgebracht ist. Neben der reflexionsverbessernden Polierung von Oberflächen können auf den Stirnflächen auch reflexionserhöhende Schichten 12 angeordnet werden, so dass die Strahlführung im Inneren des Codeträgers 1B verbessert wird. Zudem können solche Schichten weitere Eigenschaften bewirken, z.B. die Abriebfestigkeit bzw. Kratzfestigkeit des Codeträgers 1B erhöhen. Auch ist die Verwendung von Schichten nicht auf diese Variante beschränkt und es können weitere Schichten zur Unterstützung der Strahlführung verwendet werden, z.B. eine hier nicht dargestellte transmissionserhöhende Schicht als Austrittsfenster zur Auskopplung der Strahlung im Bereich des Positionscodes 2. Ausserdem ist in diesem Beispiel die dem Eintrittsfenster gegenüberliegende Fläche nicht rechtwinklig, sondern abgerundet und mit Linsenfunktion ausgebildet, wobei hierdurch eine zweite Strahlführung erfolgen kann, z.B. zur Auskopplung von Streulicht zur Steuerung der Strahlungsquelle 31.

Fig.17 zeigt eine dritte Ausführungsform der Strahlführung in einer erfindungsgemässen Lagemesseinrichtung mit einem in den Codeträger SF2 integrierten Umlenkelement. Hierzu wird an einer dem Eintrittsfenster EF gegenüberliegenden geneigten Grenzfläche eine Reflexion bewirkt, wobei in diese Beispiel hierzu ein Schrägschliff SF3 an der Aussenfläche des Codeträgers 1C angebracht wird. Durch diesen Schrägschliff wird zumindest ein Teil der Strahlung umgelenkt und auf den Positionscode 2 sowie das Erfassungselement 32 geführt. Neben der Ausbildung eines Schrägschliffes SF3 können jedoch auch andere optisch wirksame Elemente oder Ausgestaltungen von Randflächen oder internen Strukturen zum Einsatz kommen, z.B. als Prisma oder durch die Einbringung einer reflektierenden Schicht in das Material des Codeträgers 1C.

Eine vierte Ausführungsform der Strahlführung mit einem speziell geformten Eintrittsfenster EF' als divergenzänderndem Element wird in Fig.18 erläutert. Um eine optimierte Einkopplung und Strahlführung im Codeträger 1D zu bewirken, kann es vorteilhaft sein, wenn das Eintrittsfenster EF' eine strahlbeeinflussende, insbesondere divergenzändernde Wirkung aufweist. Dies kann beispielsweise durch Ausbildung einer Linsenform und damit auch Linsenfunktion erreicht werden, so dass eine grössere Freiheit in der Positionierung der Strahlungsquelle 31 folgt oder ein Verzicht auf ansonsten eventuell notwendige Optiken vor der Strahlungsquelle 31 möglich wird. Neben der Ausbildung einer Linsenstruktur im oder nach dem Eintrittsfenster EF' kann hierfür auch eine diffraktive Struktur verwendet werden, die beispielsweise direkt auf die Oberfläche eines ansonsten planaren Eintrittsfenster aufgebracht wird.

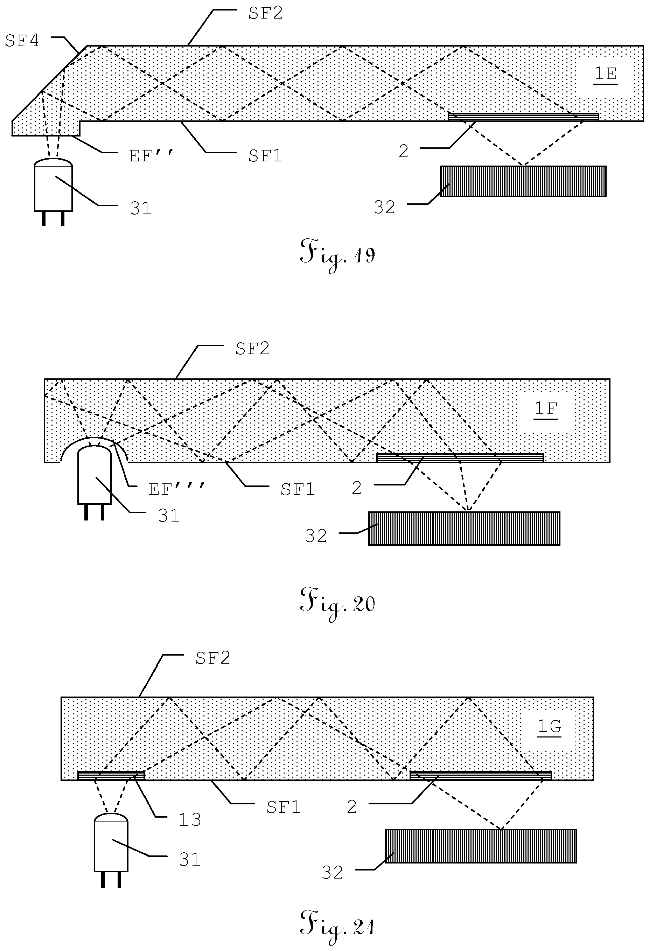

Fig.19 zeigt eine fünfte Ausführungsform der Strahlführung in einer erfindungsgemässen Lagemesseinrichtung, bei der eine zur Ausdehnungsebene des Codeträgers 1E bzw. der Ebene des Positionscodes 2 senkrechte Einkopplung erfolgt. In diesem Beispiel ist der Codeträger 1E an seinem Einkopplungsende abgewinkelt, so dass das Eintrittsfenster EF" parallel zu den Stirnflächen SF1 und SF2 orientiert ist. Die Strahlung wird somit durch das Eintrittsfenster EF" senkrecht zu den Stirnfläche SF1 und SF2 eingekoppelt und muss nachfolgend durch ein Umlenkelement, das hier beispielhaft als Schrägschliff SF4 ausgebildet ist, in ihrer Ausbreitungsrichtung verändert werden. Diese Anordnung weist den Vorteil auf, dass - wie auch in den Fig. 6 und 8 gezeigt - sowohl Strahlungsquelle 31 als auch Erfassungselement 32 auf einer Leiterplatte als gemeinsamer Trägerkomponente angeordnet werden können.

Den gleichen Vorteil bietet die in Fig.20 gezeigte sechste Ausführungsform der Strahlführung in einer erfindungsgemässen Lagemesseinrichtung. Hier wird die umlenkende Wirkung durch Reflexionen an der zur Einkopplungsrichtung parallelen Innenseite des Codeträgers 1F sowie einer Stirnseite SF2 bewirkt. Zudem ist das Eintrittsfenster EF"' mit gewölbter Oberfläche ausgebildet, so dass eine Linsenwirkung entsteht.

Fig.21 zeigt eine siebte Ausführungsform der Strahlführung in einer erfindungsgemässen Lagemesseinrichtung, bei dem als Eintrittsfenster eine diffraktive Struktur 13 verwendet wird, durch das eine fast beliebige Strahlbeeinflussung möglich ist. In diesem Beispiel erfolgt eine direkte Umlenkung aus der senkrecht zur Ebene des Positionscodes 2 erfolgenden Einkopplungsrichtung in ebendiese Ebene bzw. die Ausdehnungsebene des Codeträgers 1G.

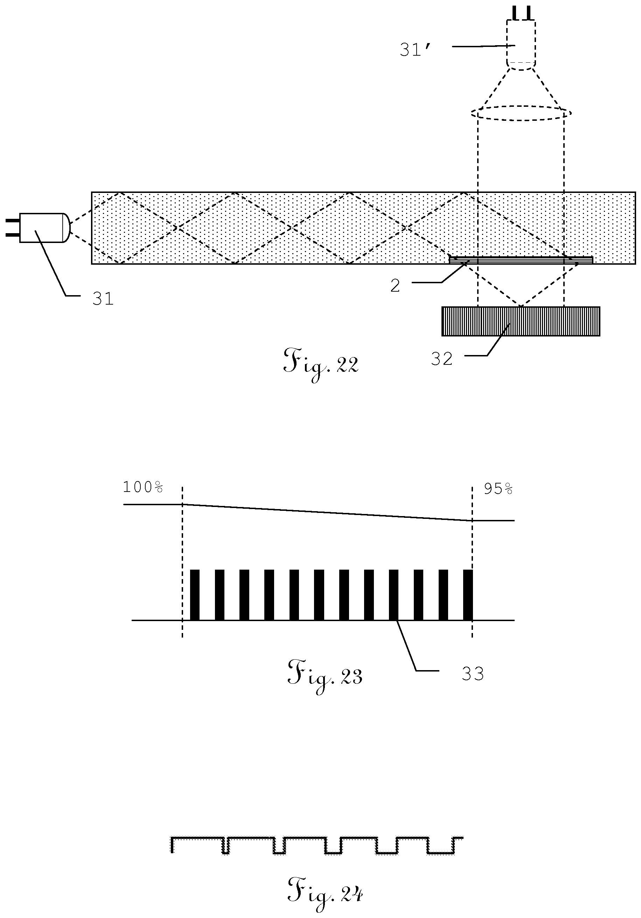

Fig.22 zeigt eine schematische Darstellung der Auskopplungsproblematik bei einer Strahlführung im Codeträger. Wie für die in Fig.15 gezeigte erste Ausführungsform der Strahlführung in einer erfindungsgemässen Lagemesseinrichtung erfolgt die Auskopplung der optischen Strahlung senkrecht zur Ausdehnungsebene des Codeträgers, wobei in diesem Beispiel die Auskopplungszone mit dem Positionscode örtlich zusammenfällt uns beispielsweise eine Ausdehnung von 3 mm aufweist. Hierbei wird die optische Strahlung im Codeträger ebenfalls durch totale interne Reflexion geführt. In anderen Ausführungsformen können Auskopplungszone und Positionscode 2 jedoch auch örtlich auseinanderfallen, z.B. wenn der Positionscode 2 im Inneren des Codeträgers angeordnet ist und die Auskopplung über die Stirnfläche stattfindet. Lösungen des Stands der Technik verwenden die hier gestrichelt dargestellte Ausleuchtung des Positionscodes 2 durch eine gegenüber dem Erfassungselement 32 angeordnete Strahlungsquelle 31', wodurch die Strahlführung im wesentlichen senkrecht zur Ausdehnung des Positionscodes 2 erfolgt und insbesondere aufgrund der hier exemplarisch dargestellten Kollimierung eine homogene und strukturfreie Ausleuchtung des Positionscodes 2 und damit auch der Auskopplungszone erfolgt. Bei einer Strahlführung im Inneren des Codeträgers erfolgt der Einfall der optischen Strahlung jedoch seitlich und schräg zum Positionscode bzw. der Auskopplungszone, wodurch bereits eine ortsabhängig unterschiedliche Ausleuchtung resultieren kann. Je nach Positionierung der Strahlungsquelle 31 kommt es zu einer Vielzahl von Reflexionen an den Wänden des Codeträgers, die auch im Bereich des Positionscodes 2 bzw. der Auskopplungszone erfolgen. Durch die Auskopplung von Strahlung bzw. Licht in diesem Bereich wird aber die Intensität verringert, so dass der nachfolgende Bereich des Positionscodes 2 schwächer ausgeleuchtet wird. Gemäss der Erfindung wird die optische Strahlung über eine Auskopplung in einer Auskopplungszone auf das Erfassungselement 32 geführt wird, wobei die Auskopplung der optischen Strahlung so erfolgt, dass das Erfassungselement 32 mit im wesentlichen homogener, d.h. gleichförmiger und strukturfreier Intensitätsverteilung ausgeleuchtet wird.

Eine erste erfindungsgemässe Möglichkeit zur Homogenisierung stellt das in Fig.23 schematisch dargestellte Prinzip der schwachen Auskopplung dar. Hierbei wird der in der Auskopplungszone ausgekoppelte Anteil der optischen Strahlung so gering gehalten, dass die pro Sensorpunkt gesammelte Lichtmenge im wesentlichen gleich ist, was anhand der hier dargestellten Amplituden 33 der einzelnen Sensorpunkte gezeigt ist, und eine im wesentlichen lineare Charakteristik der Auskopplung innerhalb der Auskopplungszone resultiert. So werden in diesem Beispiel im Bereich der Auskopplungszone lediglich 5% der anfänglich vorhandenen Lichtenergie ausgekoppelt, so dass pro Längeneinheit im wesentlichen die gleiche Lichtmenge auf das Empfangselement geführt wird. Eine solche Auskopplung kann beispielsweise durch eine über die Auskopplungszone gleichförmige und damit konstante diffraktive oder refraktive Oberflächenstrukturierung erreicht werden.

Eine zweite erfindungsgemässe Möglichkeit zur Homogenisierung stellt das in den Figuren 24-26 für einige beispielhafte Realisierungen gezeigte Prinzip der starken Auskopplung dar. Hierbei wird die Auskopplung so gestaltet, dass diese eine ortsabhängige Charakteristik aufweist. Insbesondere kann die optische Strahlung so ausgekoppelt werden, dass der pro Längeneinheit durch die Auskopplung entstehende Intensitätsabfall für die nachfolgende Längeneinheit kompensiert wird. Hierzu stehen verschiedene Techniken zur Verfügung. So kann eine ortsabhängige Erhöhung oder Verringerung von Absorption, Reflexionsvermögen oder Transmissionsgrad im Bereich der Auskopplungszone erfolgen, z.B. indem der Codeträger dort eine ortsabhängig die Absorption oder Transmission verändernde Schicht aufweist oder in der Auskopplungszone die Ortsabhängigkeit durch eine Mehrzahl von Schichten mit unterschiedlicher Absorption oder Transmission bewirkt wird. So können beispielsweise Schichten unterschiedlicher Dicke auf den Codeträger aufgebracht werden, wobei die Dicke der Schichten von der Lichtquelle aus gesehen ab- und die Transmission zunimmt. Hiermit können für die jeweiligen Zeilen von Sensorpunkten in einem Array Streifen variierender Transmission bereitgestellt werden, die somit ebenfalls zu einer Ortsabhängigkeit führen.

Daneben können auch Amplitudenhologramme oder Modulationen des Brechungsindex verwendet werden, wobei der Brechungsindex einer auf dem Codeträger angeordneten Schicht zur Erzeugung eines Volumengitters moduliert werden kann. Insbesondere kann die Auskopplungszone refraktive und/oder diffraktive Mikrostrukturen aufweisen, wie z.B. Mikroprismen, Gitter oder andere gradientenoptische Strukturen. Insbesondere kann der Positionscode selbst vermittels dieser Mikrostrukturen ausgebildet sein, so dass Code- und Homogenisierungsfunktion örtlich zusammenfallen und vorzugsweise durch dieselben Strukturen realisiert werden. In diesem Fall stellt die örtliche Auskopplung von Licht als helle Zone eines von zwei Codeelementen dar, wohingegen das Fehlen der Auskopplung als dunkle Zone und damit als das andere Codeelement wirkt. Durch die Auskopplung wird damit ein Typus von Codestrich realisiert, d.h. die Auskopplung stellt in diesem Fall selbst das Codemuster dar. Alternativ kann ein Positionscode aber auch unabhängig von der Auskopplung ausgebildet sein, z.B. als Streifenmuster oder diffraktiver Code, wobei die Auskopplungszone dann wiederum in der Codierungsrichtung homogen und ohne ortsabhängige Veränderlichkeit ausgestaltet sein kann.

Fig.24 zeigt eine erste Ausführungsform einer Struktur zur Verwirklichung der erfindungsgemässen starken Auskopplung, wobei in der Auskopplungszone eine Strukturbreite der Mikrostrukturen senkrecht zur Richtung der Auskopplung moduliert ist. In diesem Beispiel erfolgt die Auskopplung nach oben und senkrecht zur Strukturausdehnung und es nimmt, bei gleicher Periodizitätslänge, die Länge der erhabenen Struktur gegenüber der Vertiefung von links nach rechts ab, so dass das Tastverhältnis moduliert wird.

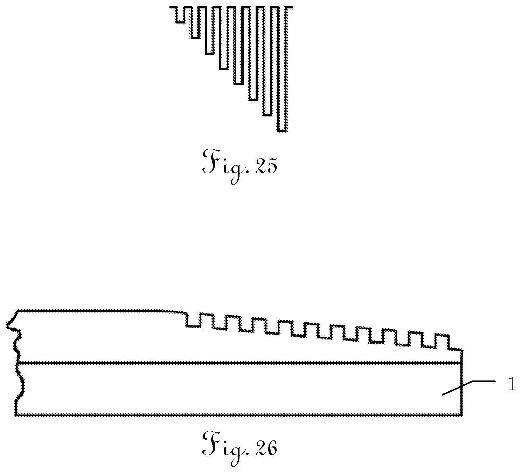

Bei der zweiten Ausführungsform einer Struktur zur Verwirklichung der erfindungsgemässen starken Auskopplung in Fig.25 wird in der Auskopplungszone eine Strukturbreite der Mikrostrukturen in Richtung der Auskopplung moduliert ist, d.h. in der Abbildung nach oben und senkrecht zum horizontalen Verlauf der Gitterstruktur. Hierbei kann insbesondere die Gittertiefe als in das Substrat eingebrachte Vertiefung von links nach rechts zunehmend erhöht werden, so dass der Auskopplungsgrad für die vorhandene Reststrahlung ortsabhängig erhöht wird.

Fig.26 zeigt schliesslich eine dritte Ausführungsform einer Struktur zur Verwirklichung der erfindungsgemässen starken Auskopplung, bei der in der Auskopplungszone ein Abstand der Mikrostrukturen zum Strahlgang im Inneren des Codeträgers 1 moduliert ist, wobei auch hier die Auskopplung senkrecht zur Ausdehnung des Codeträgers 1 und in der Abbildung nach oben erfolgt. In diesem Beispiel sind die Mikrostrukturen als solche gleichartig ausgebildet und ohne ortsabhängige Dimensionierung oder Form, jedoch verringert sich der Abstand zum im Codeträger 1 geführten Strahlgang von links nach rechts, d.h. in Bezug auf einen scheibenförmigen Codeträger 1 von innen nach aussen.

Die Variation von Strukturdimensionierung in Richtung der Auskopplung oder senkrecht hierzu kann auch kombiniert werden, wobei auch dies auch für die Kombination mit der Veränderung des Abstands zur Strahlführung gilt. So können beispielsweise für einen scheibenförmigen Codeträger in der Auskopplungszone Prismen mit von radial nach aussen zunehmender Grösse ausgebildet sein, wobei die Prismenstrukturen als von der Codestruktur unabhängige umlaufende Rillen oder als Code selbst ausgebildet sein können. In diesem Fall stellen die Prismen als Licht bzw. Strahlung auskoppelnde Struktur eines der Codeelemente dar, wohingegen die Zonen ohne jegliche Auskopplung das jeweils andere Element verkörpern.

Es versteht sich, dass diese dargestellten Figuren nur Beispiele und ausgewählte Aspekte möglicher Ausführungsformen darstellen. Insbesondere können verschiedene Elemente miteinander in anderen Zusammenstellungen kombiniert werden. So können beispielsweise Beschichtungen oder diffraktive Strukturen in allen Anordnungen verwendet werden oder auch komplexere Strahlführungen mit mehrfacher Umlenkung oder Strahlformung erfindungsgemäss realisiert werden. Ebenso sind die gezeigten Codeträger, Erfassungselemente oder Auskopplungszonen sowie ihre relative Orientierung nur schematisch und beispielhaft zu verstehen. In allen Varianten können gleichermassen linear oder flächig ausgebildete Sensorkomponenten mit verschiedenen, auf die Form und Bewegungsrichtung des Codeträgers abgestimmter Orientierungen verwendet werden.

## Patentansprüche

1. Optoelektronische Lagemesseinrichtung, mit
• einem Codeträger (1,1a-i,1A-G), der wenigstens einen optisch erfassbaren Positionscode (2,2') trägt,
• einer Strahlungsquelle (31) zur Emission von optischer Strahlung, insbesondere eine LED oder Laserdiode, und
• wenigstens einem Erfassungselement (32) mit Sensorpunkten zum Empfang wenigstens eines Teiles der optischen Strahlung, insbesondere einem Zeilen- oder Flächensensor, wodurch ein vom Positionscode (2,2') abhängiges Signal erzeugbar und somit eine Lage des Codeträgers (1,1a-i,1A-G) relativ zum Erfassungselement (32) erfassbar ist,
wobei
- der Codeträger relativ zum Erfassungselement (32) mit einem Freiheitsgrad - insbesondere rotatorisch oder translatorisch - bewegbar ist, und
- die Strahlungsquelle (31) und der Codeträger (1,1a-i,1A-G) derart angeordnet und ausgebildet sind, dass die optische Strahlung in den Codeträger (1,1a-i,1A-G) eingekoppelt und zumindest teilweise in einem in der Ausdehnungsebene des Codeträgers (1,1a-i,1A-G) liegenden Strahlgang im Inneren des Codeträgers (1,1a-i,1A-G) bis zum Positionscode (2,2') geführt und über Auskopplung in einer Auskopplungszone auf das Erfassungselement (32) geführt wird,
**dadurch gekennzeichnet, dass**
die Auskopplung der optischen Strahlung eine ortsabhängige Charakteristik aufweist und so erfolgt, dass das Erfassungselement (32) mit im wesentlichen homogener Intensitätsverteilung ausgeleuchtet wird, wobei der pro Längeneinheit durch die Auskopplung entstehende Intensitätsabfall für die nachfolgende Längeneinheit kompensiert wird.

2. Optoelektronische Lagemesseinrichtung nach Anspruch 1,
**dadurch gekennzeichnet, dass**
die Auskopplungszone refraktive Mikrostrukturen aufweist.

3. Optoelektronische Lagemesseinrichtung nach Anspruch 1 oder 2, **dadurch gekennzeichnet, dass**
die Auskopplungszone diffraktive Mikrostrukturen aufweist.

4. Optoelektronische Lagemesseinrichtung nach Anspruch 2 oder 3, **dadurch gekennzeichnet, dass**
der Positionscode (2,2') selbst vermittels dieser Mikrostrukturen ausgebildet ist.

5. Optoelektronische Lagemesseinrichtung nach Anspruch 2, 3 oder 4,
**dadurch gekennzeichnet, dass**
in der Auskopplungszone eine Strukturbreite der Mikrostrukturen senkrecht zur Richtung der Auskopplung moduliert ist, insbesondere das Tastverhältnis moduliert ist.

6. Optoelektronische Lagemesseinrichtung nach Anspruch 2, 3, 4 oder 5,
**dadurch gekennzeichnet, dass**
in der Auskopplungszone eine Strukturbreite der Mikrostrukturen in Richtung der Auskopplung moduliert ist, insbesondere eine Gittertiefe moduliert ist.

7. Optoelektronische Lagemesseinrichtung nach einem der Ansprüche 2 bis 6,
**dadurch gekennzeichnet, dass**
in der Auskopplungszone ein Abstand der Mikrostrukturen zum Strahlgang im Inneren des Codeträgers (1,1a-i,1A-G) moduliert ist.

8. Optoelektronische Lagemesseinrichtung nach einem der vorangehenden Ansprüche 1 bis 7,
**dadurch gekennzeichnet, dass**
in der Auskopplungszone ein Brechungsindex moduliert ist, insbesondere der Brechungsindex einer als Volumengitter auf dem Codeträger angeordneten Schicht.

9. Optoelektronische Lagemesseinrichtung nach einem der vorangehenden Ansprüche 1 bis 8,
**dadurch gekennzeichnet, dass**
die Auskopplungszone ein Amplitudenhologramm aufweist.

10. Optoelektronische Lagemesseinrichtung nach einem der vorangehenden Ansprüche 1 bis 9,
**dadurch gekennzeichnet, dass**
die Auskopplungszone wenigstens eine ortsabhängig die Absorption oder Transmission verändernde Schicht aufweist oder in der Auskopplungszone die ortsabhängige Charakteristik durch eine Mehrzahl von Schichten mit unterschiedlicher Absorption oder Transmission bewirkt wird.

11. Optoelektronische Lagemesseinrichtung nach einem der vorangehenden Ansprüche,
**dadurch gekennzeichnet, dass**
die Auskopplung der optischen Strahlung senkrecht zur Ausdehnungsebene des Codeträgers (1,1a-i,1A-G) erfolgt.

12. Optoelektronische Lagemesseinrichtung nach einem der vorangehenden Ansprüche,
**dadurch gekennzeichnet, dass**
die optische Strahlung im Codeträger (1,1a-i,1A-G) durch totale interne Reflexion geführt wird.

13. Optoelektronische Lagemesseinrichtung nach einem der vorangehenden Ansprüche,
**dadurch gekennzeichnet, dass**
der Codeträger (1,1a-i,1A-G) eine ring- oder scheibenförmige Geometrie besitzt, insbesondere wobei die optische Strahlung radial von innen oder aussen in den Codeträger (1,1a-b,1d-i,1A-D) eingekoppelt wird.

14. Optoelektronisches Lagemessverfahren zum Bestimmen einer Lage, insbesondere eines Winkels oder einer Länge, eines Codeträgers (1,1a-i,1A-G), der wenigstens einen Positionscode (2,2') trägt und relativ zu wenigstens einem Erfassungselement (32) mit einem Freiheitsgrad, insbesondere rotatorisch oder translatorisch, beweglich ist,
mit einem
• Erzeugen einer von der Lage des Codeträgers (1,1a-i,1A-G) abhängigen Projektion eines Teiles des Positionscodes (2,2') auf dem Erfassungselement (32), wobei das Erzeugen mindestens
□ ein Emittieren von optischer Strahlung auf den Positionscode (2,2') und
□ ein Erfassen der Projektion durch das Erfassungselement (32)
beinhaltet, und
• Ableiten der Lage des Codeträgers (1,1a-i,1A-G) relativ zum Erfassungselement (32) aus der Projektion,
wobei
- die optische Strahlung in den Codeträger (1,1a-i,1A-G) eingekoppelt,
- zumindest teilweise in einem in der Ausdehnungsebene des Codeträgers (1,1a-i,1A-G) liegenden Strahlgang im Inneren des Codeträgers (1,1a-i,1A-G) geführt wird, insbesondere bis zum Positionscode (2,2') geführt und
- in einer Auskopplungszone auf das Erfassungselement (32) ausgekoppelt wird,
**dadurch gekennzeichnet, dass**
die optische Strahlung so ausgekoppelt wird, dass das Erfassungselement (32) mit im wesentlichen homogener Intensitätsverteilung ausgeleuchtet wird, und die optische Strahlung mit ortsabhängiger Charakteristik ausgekoppelt wird und
die optische Strahlung so ausgekoppelt wird, dass der pro Längeneinheit durch die Auskopplung entstehende Intensitätsabfall für die nachfolgende Längeneinheit kompensiert wird.

15. Optoelektronisches Lagemessverfahren nach Anspruch 14,
**dadurch gekennzeichnet, dass**
die Auskopplung mit refraktiven und/oder diffraktiven Mikrostrukturen erfolgt.

## Claims

1. An optoelectronic position measuring device, having
• a code carrier (1, 1a-i, 1A-G), having at least one optically detectable position code (2, 2'),
• a radiation source (31) for emitting optical radiation, in particular an LED or laser diode, and
• at least one detecting element (32) with sensor points for receiving at least a portion of the optical radiation, in particular a line sensor or two-dimensional sensor, as a result of which a signal dependent on the position code (2, 2') can be generated, and therefore a position of the code carrier (1, 1a-i, 1A-G) relative to the detecting element (32) can be detected,
- the code carrier being movable relative to the detecting element (32) with one degree of freedom, in particular in a rotational or translational fashion, and
- the radiation source (31) and the code carrier (1, 1a-i, 1A-G) being arranged and configured in such a way that the optical radiation is coupled into the code carrier (1, 1a-i, 1A-G) and is guided up to the position code (2, 2') at least partially in a beam path, in the interior of the code carrier (1, 1a-i, 1A-G), lying in the plane of extent of the code carrier (1, 1a-i, 1A-G), and is guided onto the detecting element (32) by being decoupled in a decoupling zone,
**characterized in that**
the decoupling of the optical radiation has a spatially dependent characteristic and is performed so that the detecting element (32) is illuminated at a substantially homogeneous intensity distribution, wherein the drop in the intensity occurring per length unit owing to the decoupling is compensated for the subsequent length unit.

2. The optoelectronic position measuring device as claimed in claim 1,
**characterized in that**
the decoupling zone has refractive microstructures.

3. The optoelectronic position measuring device as claimed in claim 1 or 2,
**characterized in that**
the decoupling zone has diffractive microstructures.

4. The optoelectronic position measuring device as claimed in claim 2 or 3,
**characterized in that**
the position code (2, 2') itself is formed by means of these microstructures.

5. The optoelectronic position measuring device as claimed in claim 2, 3 or 4,
**characterized in that**
a structural width of the microstructures is modulated in the decoupling zone in a fashion perpendicular to the decoupling-direction, in particular the mark-space ratio being modulated.

6. The optoelectronic position measuring device as claimed in claim 2, 3, 4 or 5,
**characterized in that**
a structural width of the microstructures is modulated in the decoupling zone in the decoupling-direction, in particular a grid depth being modulated.

7. The optoelectronic position measuring device as claimed in one of claims 2 to 6,
**characterized in that**
a spacing of the microstructures in relation to the beam path in the interior of the code carrier (1, 1a-i, 1A-G) is modulated in the decoupling zone.

8. The optoelectronic position measuring device as claimed in one of the preceding claims 1 to 7,
**characterized in that**
a refraction index, in particular the refraction index of a layer arranged as volume grating on the code carrier, is modulated in the decoupling zone.

9. The optoelectronic position measuring device as claimed in one of the preceding claims 1 to 8,
**characterized in that**
the decoupling zone has an amplitude hologram.

10. The optoelectronic position measuring device as claimed in one of the preceding claims 1 to 9,
**characterized in that**
the decoupling zone has at least one layer which varies the absorption or transmission in a spatially dependent fashion, or the spatially dependent characteristic is effected in the decoupling zone by a plurality of layers of different absorption or transmission.

11. The optoelectronic position measuring device as claimed in one of the preceding claims,
**characterized in that**
the optical radiation is decoupled in a fashion perpendicular to the plane of extent of the code carrier (1, 1a-i, 1A-G).

12. The optoelectronic position measuring device as claimed in one of the preceding claims,
**characterized in that**
the optical radiation is guided in the code carrier (1, 1a-i, 1A-G) by total internal reflection.

13. The optoelectronic position measuring device as claimed in one of the preceding claims,
**characterized in that**
the code carrier (1, 1a-i, 1A-G) has an annular or disk-shaped geometry, in particular the optical radiation being coupled radially into the code carrier (1, 1a-b, 1d-i, 1A-D) from inside or outside.

14. An optoelectronic position measuring method for determining a position, in particular an angle or a length, of a code carrier (1, 1a-i, 1A-G) that carries at least one position code (2, 2') and is movable relative to at least one detecting element (32) with one degree of freedom, in particular in a rotational or translational fashion, including
• generating a projection, dependent on the position of the code carrier (1, 1a-i, 1A-G), of a part of the projection code (2, 2') on the detecting element (32),
the generating comprising at least
□ emitting optical radiation onto the position code (2, 2') and
□ detecting the projection by the detecting element (32),
and
• deriving the position of the code carrier (1, 1a-i, 1A-G) relative to the detecting element (32) from the projection,
- the optical radiation being coupled into the code carrier (1, 1a-i, 1A-G),
- and guided at least partially in a beam path, in the interior of the code carrier (1, 1a-i, 1A-G), lying in the plane of extent of the code carrier (1, 1a-i, 1A-G), in particular being guided up to the position code (2, 2'), and
- being decoupled onto the detecting element (32) in a decoupling zone,
**characterized in that**
the optical radiation is decoupled so that the detecting element (32) is illuminated at a substantially homogeneous intensity distribution, and the optical radiation is coupled out with a spatially dependent characteristic and
the optical radiation is coupled out so that the drop in the intensity occurring per length unit owing to the decoupling is compensated for the subsequent length unit.

15. The optoelectronic position measuring method as claimed in claim 14,
**characterized in that**
the decoupling is performed by refractive and/or diffractive microstructures.

## Revendications

1. Dispositif optoélectronique de mesure de position, comportant
• un support de code (1, 1a-i, 1A-G) portant au moins un code de position (2, 2') pouvant être détecté optiquement,
• une source de rayonnement (31) destinée à émettre un rayonnement optique, notamment une LED ou une diode laser, et
• au moins un élément de détection (32) doté de points capteurs destiné à recevoir au moins une partie du rayonnement optique, notamment un capteur de surface ou de ligne, permettant de produire un signal fonction du code de position (2, 2') et ainsi de détecter une position du support de code (1, 1a-i, 1A-G) par rapport à l'élément de détection (32),
et dans lequel
- le support de code peut être déplacé, notamment en rotation ou en translation, par rapport à l'élément de détection (32) selon un degré de liberté, et
- la source de rayonnement (31) et le support de code (1, 1a-i, 1A-G) sont conçus et disposés de manière que le rayonnement optique est couplé dans le support de code (1, 1a-i, 1A-G) et guidé au moins en partie dans un chemin optique situé dans le plan de dilatation du support de code (1, 1a-i, 1A-G) à l'intérieur du support de code (1, 1a-i, 1A-G) jusqu'au code de position (2, 2'), et guidé sur l'élément de détection (32) par découplage dans une zone de découplage,
**caractérisé en ce que**
le découplage du rayonnement optique présente une caractéristique fonction du lieu et se produit de manière que l'élément de détection (32) est éclairé avec une distribution d'intensité essentiellement homogène, la chute d'intensité par unité de longueur provoquée par le découplage étant compensée pour l'unité de longueur suivante.

2. Dispositif optoélectronique de mesure de position selon la revendication 1, **caractérisé en ce que** la zone de découplage présente des microstructures réfractives.

3. Dispositif optoélectronique de mesure de position selon la revendication 1 ou 2, **caractérisé en ce que** la zone de découplage présente des microstructures diffractives.

4. Dispositif optoélectronique de mesure de position selon la revendication 2 ou 3, **caractérisé en ce que** le code de position (2, 2') lui-même est formé de ces microstructures.

5. Dispositif optoélectronique de mesure de position selon la revendication 2, 3 ou 4, **caractérisé en ce qu'**une largeur de structure des microstructures, notamment le rapport cyclique, subit, dans la zone de découplage, une modulation orthogonale à la direction de découplage.

6. Dispositif optoélectronique de mesure de position selon la revendication 2, 3, 4 ou 5, **caractérisé en ce qu'**une largeur de structure des microstructures, notamment une profondeur de réseau de diffraction, subit, dans la zone de découplage, une modulation dans la direction de découplage.

7. Dispositif optoélectronique de mesure de position selon l'une des revendications 2 à 6, **caractérisé en ce qu'**une distance séparant les microstructures et le chemin optique à l'intérieur du support de code (1, 1a-i, 1A-G) subit une modulation dans la zone de découplage.

8. Dispositif optoélectronique de mesure de position selon l'une des revendications 1 à 7 précédentes, **caractérisé en ce qu'**un indice de réfraction subit une modulation dans la zone de découplage, notamment l'indice de réfraction d'une couche disposée sur le support de code en tant que réseau de diffraction volumique.

9. Dispositif optoélectronique de mesure de position selon l'une des revendications 1 à 8 précédentes, **caractérisé en ce que** la zone de découplage présente un hologramme d'amplitude.

10. Dispositif optoélectronique de mesure de position selon l'une des revendications 1 à 9 précédentes, **caractérisé en ce que** la zone de découplage présente au moins une couche dont l'absorption ou la transmission varie en fonction du lieu ou **en ce que**, dans la zone de découplage, la caractéristique fonction du lieu est induite par une pluralité de couches dont la valeur d'absorption ou de transmission est différente.

11. Dispositif optoélectronique de mesure de position selon l'une des revendications précédentes, **caractérisé en ce que** le découplage du rayonnement optique est orthogonal au plan de dilatation du support de code (1, 1a-i, 1A-G).

12. Dispositif optoélectronique de mesure de position selon l'une des revendications précédentes, **caractérisé en ce que** le rayonnement optique est guidé dans le support de code (1, 1a-i, 1A-G) par réflexion interne totale.

13. Dispositif optoélectronique de mesure de position selon l'une des revendications précédentes, **caractérisé en ce que** le support de code (1, 1a-i, 1A-G) possède une forme d'anneau ou de disque, le rayonnement optique étant notamment couplé radialement depuis l'intérieur ou l'extérieur dans le support de code (1, 1a-i, 1A-G).

14. Procédé optoélectronique de mesure de position permettant de déterminer une position, notamment un angle ou une longueur, d'un support de code (1, 1a-i, 1A-G) portant au moins un code de position (2, 2') et pouvant être déplacé, notamment en rotation ou en translation, par rapport à un élément de détection (32) selon un degré de liberté, comprenant
• l'obtention d'une projection d'une partie du code de position (2, 2') sur l'élément de détection (32), ladite projection étant fonction de la position du support de code (1, 1a-i, 1A-G), ladite obtention comprenant au moins
∘ l'émission d'un rayonnement optique vers le code de position (2, 2') et
∘ la détection de la projection par l'élément de détection (32)
et
• la déduction, à partir de la projection, de la position du support de code (1, 1a-i, 1A-G) par rapport à l'élément de détection (32),
et dans lequel le rayonnement optique est
- couplé dans le support de code (1, 1a-i, 1A-G),
- guidé au moins en partie dans un chemin optique situé dans le plan de dilatation du support de code (1, 1a-i, 1A-G) à l'intérieur du support de code (1, 1a-i, 1A-G), notamment jusqu'au code de position (2, 2'), et
- découplé sur l'élément de détection (32) dans une zone de découplage,
**caractérisé en ce que**
le rayonnement optique est découplé de manière que l'élément de détection (32) est éclairé avec une distribution d'intensité essentiellement homogène, et le rayonnement optique est découplé selon une caractéristique fonction du lieu, et
le rayonnement optique est découplé de manière que la chute d'intensité par unité de longueur provoquée par le découplage est compensée pour l'unité de longueur suivante.

15. Procédé optoélectronique de mesure de position selon la revendication 14, **caractérisé en ce que** le découplage a lieu avec des microstructures réfractives et/ou diffractives.
